Europäisches Patentamt

European Patent Office

Office européen des brevets

(11) Veröffentlichungsnummer: **0 517 105 A1**

# EUROPÄISCHE PATENTANMELDUNG

(21) Anmeldenummer: **92109018.9**

(22) Anmeldetag: **29.05.92**

(51) Int. Cl.5: **G11B  15/473**, G11B 15/14,
H02K 29/10

(30) Priorität: **06.06.91 DE 4118535**

(43) Veröffentlichungstag der Anmeldung:
**09.12.92 Patentblatt  92/50**

(84) Benannte Vertragsstaaten:
**PT**

(71) Anmelder: **DEUTSCHE THOMSON-BRANDT GMBH**
**Hermann-Schwer-Strasse 3**
**W-7730 Villingen-Schwenningen(DE)**

(72) Erfinder: **Uhde, Dietmar**
**Weiherstrasse 11**
**W-7744 Königsfeld(DE)**
Erfinder: **Gleim, Günter**
**Oberer Sonnenbühl 22**
**W-7730 VS-Villingen(DE)**
Erfinder: **Schandl, Hartmut**
**Hasenleiten 94**
**A-1110 Wien(AT)**
Erfinder: **Lehmann, Rüdiger**
**Haldenweg 42**
**W-7742 St. Georgen(DE)**
Erfinder: **Hoch, Peter**
**Bergstrasse 56**
**W-7740 Triberg(DE)**

(54) **Kopftrommel für einen Recorder.**

(57) 2.1. Bei einer bekannten Kopftrommel enthält das rotierende Trommelteil optisch lesbare Markierungen zur Erzeugung von Impulsen für eine elektronische Kommutierung, eine Servoregelung oder eine Kopfumschaltung. Aufgabe ist es, die Herstellung derartiger Markierungen herstellungstechnisch zu vereinfachen und den Einfluß vom Staub auf den lichtdurchlässigen Plexiglasteilen, den sogenannten Noisy-Effekt, zu verringern.

2.2. Der rotierende Trommelteil enthält einen Ring (5) mit abwechselnd lichtundurchlässigen Stegen (8, 9) und dazwischenliegenden fensterförmigen Öffnungen (11).

2.3. Insbesondere Kopftrommel für einen VHS oder S-VHS Videorecorder

Fig.2

Die Erfindung geht aus von einer Kopftrommel für einen Recorder gemäß dem Oberbegriff des Anspruchs 1. Eine derartige Kopftrommel ist bekannt durch die DE-OS 36 04 238.

Eine derartige Kopftrommel enthält einen Markierungsring in Form eines topf- oder napfförmiges Teils aus Plexiglas, auf dessen umlaufenden Rand Markierungen in Form mehr oder weniger breiter schwarzer Streifen aufgedruckt sind. Durch optoelektronische Abtastung dieser Streifen werden kurze Impulse relativ hoher Frequenz und längere Impulse geringerer Frequenz erzeugt. Derartige Impuls dienen zur Regelung der Drehzahl der Kopftrommel, zur Erzeugung von Kopfumschaltimpulsen und zur elektronischen Kommutierung eines bürstenlosen Gleichstrommotors.

Bei einer derartigen Kopftrommel müssen die Markierungen in einem zusätzlichen Arbeitsvorgang auf das zylinderförmige Plexiglasteil aufgedruckt werden. Außerdem tritt ein sogenannter Noisy-Effekt auf, der folgendes bedeutet: Auf den Plexiglasbereichen zwischen den schwarzen Marken, die die lichtdurchlässigen Bereiche bilden, kann es zu Staubablagerungen kommen. Diese Staubablagerungen beeinflussen das bei der Abtastung durchdringende Licht und erzeugen in dem erzeugten Impulssignal ein Rauschen, das zu Fehlfunktionen führen kann.

Der Erfindung liegt die Aufgabe zugrunde, für die Realisierung der Marken die Herstellung zu vereinfachen, die Kosten des Markierungsringes zu verringern und den genannten Noisy-Effekt weitestgehend auszuschalten.

Diese Aufgabe wird durch die im Anspruch 1 angegebene Erfindung gelöst. Vorteilhafte Weiterbildungen der Erfindung sind in den Unteransprüchen angegeben.

Die Erfindung besteht somit darin, daß die Markierstreifen durch von dem Rand ausgehende, lichtundurchlässige Stege unterschiedlicher Breite gebildet sind, die zwischen sich fensterförmige Öffnungen bilden und an ihren dem Rand abgewandten Enden über einen umlaufenden Ring miteinander verbunden sind.

Die lichtdurchlässigen Bereiche des bekannten Plexiglasringes werden somit durch offene Fenster ersetzt. Dadurch, daß in diesen Bereichen somit kein Material mehr vorhanden ist, wird die Ansammlung von Staub mit Sicherheit vermieden und dadurch der genannte Noisy-Effekt ausgeschaltet. Die gedruckten schwarzen Streifen bei dem bekannten Plexiglasring werden durch die lichtundurchlässigen Materialstege ersetzt. Dadurch wird der Arbeitsvorgang für das Aufdrucken von schwarzen Streifen eingespart. Da sowohl die aus schwarzen Kunststoff bestehenden Stege als auch die dazwischen liegenden fensterförmigen Öffnungen sich praktisch nicht ändern, wird ein Alterungsprozeß, der die Qualität der optischen Abtastung verringern kann, ausgeschlossen. Durch die absolute Lichtundurchlässigkeit der Stege und die absolute, sich nicht ändernde Lichtdurchlässigkeit der fensterförmigen Öffnungen wird eine große Hell/Dunkel-Dynamik erreicht, die ebenfalls keiner Alterung unterliegt.

Der Ring, der die Enden der schmalen und breiten Stege miteinander verbindet, hat eine besondere Bedeutung. Wenn die von dem Rand ausgehenden, parallel zur Achse weisenden Stege frei enden, kann es insbesondere bei den schmalen Stegen zu einem Verbiegen oder Verziehen durch Temperatureinflüsse oder Alterung kommen. Da die Impulse aus diesen Stegen abgeleitet werden, würden Zeitfehler in der Lage der Impulse anstehen. Auch besteht die Gefahr, daß einzelne Stege wegen ihrer geringen Breite abbrechen. Durch den Ring, der die an sich freien Enden der Stege miteinander verbindet, wird eine große Stabilität auch für die schmalen Stege gewährleistet. Ein Verziehen der Stege in Radialrichtung oder Umfangrichtung wird dadurch vermieden. Erst durch die Kombination der lichtundurchlässigen Stege, der allseitig geschlossenen, lichtdurchlässigen fensterförmigen Öffnungen und des die Stege verbindenden Ringes wird ein Markierring geschaffen, der die obengenannten Vorteile aufweist und alle Anforderungen insbesondere hinsichtlich Stabilität und Genauigkeit der erzeugten Impulse erfüllt.

Die Erfindung wird im folgenden anhand der Zeichnung an einem Ausführungsbeispiel erläutert. Darin zeigen

Fig. 1      einen Markierring einer bekannten Kopftrommel,

Fig. 2      einen erfindungsgemäß ausgebildeten Markierring in Perspektive und

Fig. 3      im Prinzip einen Schnitt durch den Ring gemäß Fig. 2.

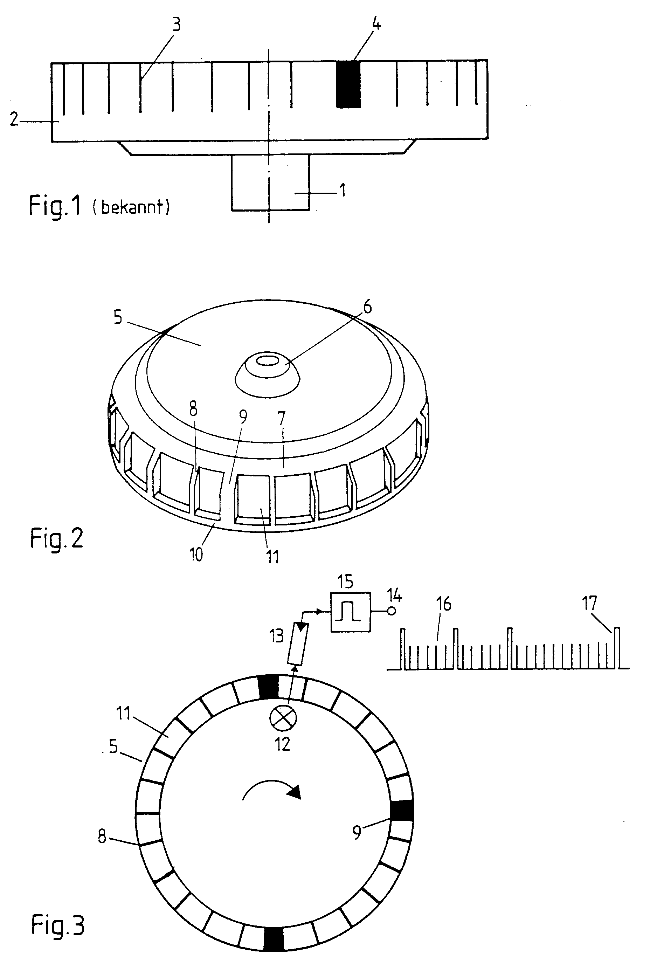

In Fig. 1 ist an dem rotierenden Teil 1 einer Kopftrommel das topfförmig ausgebildete rotierende Teil 2 aus Plexiglas befestigt. Am äußeren Umfang des Teils 2 sind Marken in Form schmaler schwarzer Striche 3 und Marken in Form breiterer schwarzer Striche 4 aufgedruckt. Durch optoelektronische Abtastung dieser Marken werden durch die Striche 3 kurze Impulse relativ hoher Frequenz und durch die Striche 4 längere Impulse geringerer Frequenz erzeugt.

Fig. 2 zeigt ein topf- oder napfförmiges rotierendes Teil 5, das in seiner Funktion etwa dem Teil 2 in Fig.1 entspricht. Das Teil 5 besteht jedoch nicht aus Plexiglas, sondern aus einem lichtundurchlässigen schwarzen Kunststoff. Das Teil 5 ist über die Nabe 6 an der rotierenden Welle der Kopftrommel befestigt. Der äußere umlaufende Rand des Teiles 5 enthält einen durchlaufenden, lichtundurchlässigen Steg 7. Vom dem Steg 7 erstrecken sich eine Vielzahl von Stegen 8 relativ geringer Breite von ca 0,5 mm und einige Stege 9 größerer Breite von ca 3 mm. Alle Stege 8, 9 enden in dem ebenfalls umlaufenden Ring 10. Der umlaufende Steg 7, die schmalen Stege 8, die breiten Stege 9 sowie der umlaufende Ring 10 bilden zwischen sich eine Vielzahl fensterartiger Öffnungen 11, durch die der Lichstrahl einer Lichtschranke ungehindert hindurchtreten kann.

Die schmalen Stege 8 entsprechen in ihrer Funktion den schmalen Strichen 3 in Fig. 1. Der Vorteil besteht aber darin, daß die durch die Stege 8 gebildeten Marken nicht aufgedruckt werden müssen, sondern durch das einteilige Kunststoffspritzteil gemäß Fig. 2 selbst gebildet sind. Die breiten Stege 9 haben die Funktion der breiten Striche 4 in Fig. 1. Die fensterartigen Öffnungen 11 entsprechen den lichtdurchlässigen Abschnitten zwischen den Strichen 3, 4 in Fig. 1. Vorteilhaft ist jedoch, daß in diesen Bereichen im Gegensatz zu Fig. 1 kein Material vorhanden ist und somit auch Staubablagerungen in diesen Bereichen nicht auftreten können. Der umlaufende Ring 10, in dem die Stege 8, 9 enden und der somit die Enden dieser Stege miteinander verbindet, gewährleistet die beschriebene notwendige Stabilität insbesondere für die schmalen Stege 8.

Figur 3 zeigt im Prinzip die Wirkungsweise des Teiles 5 in Fig. 2 in einem Schnitt in der Höhe der Öffnungen 11. Es sind drei breite Stege 9 bei den Drehwinkeln 0°, 90°, 180° vorgesehen. Diese Lösung ist vorteilhaft, da nur durch eine derartige unsymmetrische Anordnung die jeweilige Lage des Teils 5 und damit des rotierenden Teils der Kopftrommel detektiert werden kann. Bei zwei um 180° versetzten Stegen 9 wäre die Lage um 180° unbestimmt. Die Abtastung der durch die Stege 8, 9 gebildeten Marken erfolgt mit einer Lichtquelle 12 und einem Fotoelement 13. Durch die optoelektronische Abtastung der Stege 8, 9 wird am Ausgang 14 eines Impulsformers 15 eine Impulsfolge erzeugt. Diese enthält relativ kurze Impulse 16 hoher Frequenz, die durch die schmalen Stege 8 ausgelöst werden und vorzugsweise zur Regelung der Drehgeschwindigkeit der Kopftrommel dienen. Die Impulsfolge enthält außerdem relativ lange Impulse 17 geringerer Frequenz und größerer Amplitude, die durch die breiten Stege 9 erzeugt werden und vorzugsweise für eine Servoregelung oder zur Erzeugung von Schaltimpulsen für eine Kopfumschaltung dienen.

**Patentansprüche**

1. Kopftrommel für einen Recorder mit einem rotierenden Trommelteil mit einem umlaufenden Rand mit einer Vielzahl von äquidistanten Markierstreifen geringer Breite und einer geringeren Zahl von dazwischen liegenden Markierstreifen größerer Breite zum Erzeugen von Impulsen für eine elektronische Motorkommutierung und/oder eine Servoregelung und/oder eine Kopfumschaltung, **dadurch gekennzeichnet**, daß die Markierstreifen durch von dem Rand (7) ausgehende, lichtundurchlässige Stege ( 8, 9) unterschiedlicher Breite gebildet sind, die zwischen sich fensterförmige Öffnungen (11) bilden und an ihren dem Rand (7) abgewandten Enden über einen umlaufenden Ring (10) miteinander verbunden sind.

2. Kopftrommel nach Anspruch 1, **dadurch gekennzeichnet**, daß drei Stege (9) mit je einem Drehwinkelabstand von 90° vorgesehen sind.

3. Kopftrommel nach Anspruch 1, **dadurch gekennzeichnet**, daß der rotierende Trommelteil (1) ein topf- oder napfförmiges Teil (5) aufweist, in dessen flachen, umlaufenden, mit seiner Ebene etwa parallel zur Rotationsachse weisenden Rand die Stege (8, 9) ausgebildet sind.

4. Kopftrommel nach Anspruch 4, **dadurch gekennzeichnet**, das das topf- oder napfförmige Teil (5) mit dem Rand (7), den Stegen (8, 9) und dem Ring (10) als ein einstückiges Kunststoff-Spritzteil hergestellt ist.

Fig.1 (bekannt)

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | EP-A-0 233 540 (DEUTSCHE THOMSON-BRANDT) * Spalte 3, Zeile 4 - Zeile 56; Abbildungen 1,2 * | 1,3 | G11B15/473 G11B15/14 H02K29/10 |
| A | | 2,4 | |
| | --- | | |
| Y | GB-A-1 546 386 (STRATHEARN) * Seite 1, Zeile 74 - Zeile 83 * * Seite 1, Zeile 93 - Seite 2, Zeile 3 * * Seite 2, Zeile 68 - Zeile 97; Abbildungen 1,3,6 * | 1,3 | |
| | --- | | |
| Y | DE-C-3 403 150 (DEUTSCHE THOMSON-BRANDT) * Spalte 2, Zeile 44 - Zeile 66; Abbildungen 1,2 * | 1,3 | |
| A | | 2 | |
| | --- | | |
| Y | US-A-3 569 804 (P. A. STUDER) * Spalte 4, Zeile 25 - Spalte 5, Zeile 28; Abbildungen 3,4 * | 1,3 | |
| | ----- | | RECHERCHIERTE SACHGEBIETE (Int. Cl.5) G11B H02K |

Der vorliegende Recherchenbericht wurde für alle Patentansprüche erstellt

| Recherchenort | Abschlußdatum der Recherche | Prüfer |
|---|---|---|
| DEN HAAG | 15 SEPTEMBER 1992 | ZANICHELLI F. |

EPO FORM 1503 03.82 (P0403)